# EUROPÄISCHE PATENTSCHRIFT

(11) **EP 4 385 910 B1**
(45) Veröffentlichungstag und Bekanntmachung des Hinweises auf die Patenterteilung: **02.07.2025**
(21) Anmeldenummer: 22213879.4
(22) Anmeldetag: 15.12.2022
(51) Int. Cl.: B65B 65/00, B65G 37/02, B65G 41/00, B65B 35/54, B65B 59/00, B65B 59/04, B65B 9/20, B65B 13/02, B65B 5/10, B65B 35/22, B65B 35/24

(54) **VERPACKUNGSLINIE UND ENTSPRECHENDES SYSTEM**
PACKAGING LINE AND CORRESPONDING SYSTEM
LIGNE D'EMBALLAGE ET SYSTÈME ASSOCIÉ

(43) Veröffentlichungstag der Anmeldung: 19.06.2024
(73) Patentinhaber: BEUMER Group GmbH & Co. KG, 59269 Beckum (DE)
(72) Erfinder: Tellen, Marc, 48291 Telgte (DE); Austermann, Niklas, 33330 Gütersloh (DE)
(74) Vertreter: Angerhausen, Christoph

(56) Entgegenhaltungen:
- EP-A1- 3 792 206
- WO-A1-2018/038171
- US-A- 3 075 659
- US-B1- 10 407 252
- BEHN + BATES: "FFS 600 - A look at a filling line", 6 March 2017 (2017-03-06), XP093050818, Retrieved from the Internet <URL:https://www.youtube.com/watch?v=3Q3nl60Lt7A> [retrieved on 20230531]
- BEHN + BATES: "FFS 600 - A look at a filling line", 6 March 2017 (2017-03-06), XP093050818, Retrieved from the Internet <URL:https://www.youtube.com/watch?v=3Q3nl60Lt7A> [retrieved on 20230531]

## Beschreibung

Die Erfindung betrifft ein System aufweisend zumindest eine Verpackungslinie, beispielsweise eine FFS-Linie (FFS = Form-Fill-Seal), mit einem Fördersystem zum Transport von gefüllten Verpackungseinheiten, beispielsweise mit Schüttgut gefüllte Säcke, zwischen Bearbeitungsstationen der Verpackungslinie, wobei die Verpackungslinie eine Mehrzahl mittels des Fördersystems miteinander verbundener Bearbeitungsstationen aufweist, welche zumindest eine Verpackungsstation, beispielsweise eine Abfüllstation (FFS-Maschine, Rundabfüllmaschine, Reihenabfüllmaschine), umfassen, wobei das Fördersystem zumindest einen fest installierten Teil und zumindest einen mobilen Teil aufweist, wobei der mobile Teil eine Mehrzahl miteinander und/oder mit dem fest installierten Teil und/oder den Bearbeitungsstationen verbindbarer Stetigförderersegmente zum Ausbilden eines Förderstreckenabschnitts aufweist. Eine derartige Verpackungslinie ist bekannt aus Behn + Bates: "FFS 600 - A look at a filling line", 6. März 2017 (2017-03-06), https://www.youtube.com/watch?v=3Q3nlI6oLt7A.

Aus dem Stand der Technik ist eine Verpackungslinie zum Absacken von Schüttgut aus einer Silofarm bekannt, deren Abfüllstationen zwischen der Mehrzahl Silos der Silofarm verfahrbar sind, wobei das Verfahren der Abfüllstationen per Fernsteuerung durch einen Bediener erfolgt. Das Abfördern der gefüllten Säcke zum Palettieren erfolgt über Gurtförderer. Bei jedem Verfahren der Abfüllstationen müssen die Gurtförderer händisch an die neue Position der Abfüllstation angepasst werden und an dieser arretiert werden, inklusive dem Herstellen einer Daten- und einer Energieverbindung. Ein Silo wird in ca. 4-8h leergefahren, was bedeutet, dass jede Abfüllstation ein- bis zweimal pro Schicht verfahren werden muss, so dass ein erheblicher Personalaufwand allein für das Umkonfigurieren der Förderer notwendig ist. Ein zusätzlicher Personalaufwand besteht darin, dass die Gurtförderer um Hindernisse wie Säulen oder anderweitige Maschinentechnik etc. herum platziert werden müssen. Nicht benötigte Förderer, welche beispielsweise anfallen, wenn der Förderweg von einem derzeit genutzten Silo gering ist, werden zwischen den Silos stehengelassen oder müssen ebenfalls manuell zu einem Aufbewahrungsort geschoben werden. Zwischen den Silos herumstehende Förderer verringern jedoch den verfügbaren Platz im Arbeitsbereich, andererseits bindet das Verbringen von nicht genutzten Förderern an den Aufbewahrungsort zusätzliche Personalkapazitäten.

Es ist daher die Aufgabe der Erfindung, ein System derart weiterzuentwickeln, dass dieses zum einen einfacher und kostengünstiger umkonfiguriert und zum anderen dadurch besser ausgelastet werden kann bzw. dass Maschinenstillstände vermieden bzw. abgefangen werden können.

Die Aufgabe wird gelöst mit den Merkmalen des unabhängigen Anspruchs. Vorteilhafte Ausgestaltungen sind zudem in den Unteransprüchen angegeben.

Demgemäß ist vorgesehen, dass das System ferner eine Mehrzahl in einem Raster angeordneter Schüttgutsilos aufweist, wobei die zumindest eine Verpackungsstation der Verpackungslinie zwischen den mehreren Schüttgutsilos verfahrbar ist und die Verpackungslinie einen außerhalb des Rasters liegenden Anschlusspunkt des sich stromabwärts von diesem erstreckenden fest installierten Teils des Fördersystems der Verpackungslinie aufweist, wobei der mobile Teil mit dem Anschlusspunkt und der Verpackungsstation verbunden ist und einen Förderstreckenabschnitt zwischen diesen ausbildet, welcher ein vorbestimmbares Layout aufweist. Ferner weist die Verpackungslinie zumindest einen Unstetigförderer auf, beispielsweise ein AGV, welcher zum Transportieren der Stetigförderersegmente ausgebildet ist, wobei der Unstetigförderer derart angesteuert ist, dass mittels diesem der Förderstreckenabschnitt nach einem vorbestimmbaren Layout konfigurierbar ist. Es kann vorgesehen sein, dass der Unstetigförderer eine für den Förderstreckenabschnitt vorgesehene Anzahl an Stetigförderersegmenten in einem dem Layout entsprechenden Muster und einer entsprechenden Ausrichtung anordnet. Es kann vorgesehen sein, dass die einzelnen Stetigförderersegmente eine zusammenhängende Förderstrecke ausbilden. Die Verpackungsstation kann eine Abfüllmaschine, insbesondere eine FFS-Maschine, sein, welche zum Erzeugen, Befüllen und Verschließen von Säcken eingerichtet ist.

Die Erfindung weist die Vorteile auf, dass mithilfe des mobilen Teils des Fördersystems ein variables Umstrukturieren von Förderersegmenten einer Verpackungsmaschine ermöglicht ist, wobei gleichzeitig ein fest installierter Teil des Fördersystems vorgesehen ist, für Abschnitte, bei welchen von vornherein klar ist, dass kein Bedarf für eine Rekonfiguration besteht. Dadurch kann der insbesondere bei Verpackungsanlagen auftretenden Gegebenheit begegnet werden, dass einerseits ein häufiges Umkonfigurieren des Anlagenabschnitts im Abfüllbereich notwendig ist und andererseits ein Anlagenabschnitt, insbesondere im Palettier- und im Ladungssicherungsbereich, vorgesehen ist, dessen Standort nicht variiert werden muss. Durch die Erfindung werden ferner die jeweiligen Vorteile von stetiger Fördertechnik wie Gurtförderer oder Rollenförderer und unstetiger Fördertechnik wie AGVs zur temporären Mobilmachung der stetigen Fördertechnik für den Abtransport abgefüllter Säcke einer Abfüllmaschine kombiniert. Als Unstetigförderer oder unstetige Fördertechnik werden im Rahmen der Erfindung Fördersysteme verstanden, die zum Transport von Waren, Stückgütern oder Teilen, beispielsweise Stetigförderersegmenten, eingesetzt werden. Im Gegensatz zu Stetigförderern oder stetiger Fördertechnik sind sie nur dann aktiv, wenn Waren, Stückgüter oder Teile befördert werden. Beispiele für Unstetigförderer sind Gabelstapler, Kräne oder mobile Transportsysteme, beispielsweise AGVs (= automated guided vehicle), FTFs (=fahrerlose Transportfahrzeuge), FTS (=fahrerlose Transportsysteme), shuttles, fahrbare oder bewegliche Roboter, vorzugsweise mit Rollen oder Rädern, etc.

Das Layout kann über eine zentrale Leitstelle oder dezentral koordiniert werden. Das Layout kann Informationen über den Verlauf des Förderstreckenabschnitts, dessen Verbindungspunkte mit dem Fördersystem und/oder den Bearbeitungsstationen sowie die Anzahl der für den Förderstreckenabschnitt notwendigen Stetigförderersegmente umfassen. Das Layout kann ferner für jedes dafür verwendete Stetigförderersegment Informationen über die Ausrichtung des Segments und für den Fall, dass unterschiedliche Segmenttypen vorgesehen sind, den Typ des jeweiligen Stetigförderersegments umfassen. Beispielsweise können unterschiedliche Segmente für Geradeausstrecken, Links- oder Rechtskurven, Steigungen und Gefälle und/oder Segmente zum Anknüpfen des mobilen an fest installierte Fördertechnikteile oder an Bearbeitungsstationen vorgesehen sein. Alternativ oder ergänzend können die fest installierten Teile des Fördersystems und/oder die Bearbeitungsstationen Kopplungseinrichtungen zum Anschließen eines Stetigförderersegments aufweisen. Es kann vorgesehen sein, dass die Förderrichtungen an Kopplungsstellen des Förderstreckenabschnitt und der Anschlussstelle an der Verpackungslinie unterschiedlich sind, bspw. senkrecht zueinander stehen. Es kann vorgesehen sein, dass an einer derartigen Kopplungsstelle eine Einrichtung zum vollständigen Überführen von Verpackungseinheiten vom mobilen Förderstreckenabschnit auf die Verpackungslinie vorgesehen ist. Bspw. kann ein Schieber vorgesehen sein. Alternativ kann der Förderstreckenabschnitt vor Erreichen der Verpackungslinie ein Gefälle aufweisen. Ferner kann an Kopplungsstellen mit unterschiedlichen Förderrichtungen eine Drehvorrichtung vorgesehen sein, welche zum Drehen von auf dem Förderstreckenabschnitt geförderten Verpackungseinheiten in die Zielförderrichtung der Verpackungslinie aufweist, um beispielsweise längliche Säcke vor Erreichen der Verpackungslinie korrekt ausrichten zu können.

Die Layouts der Förderstreckenabschnitte können derart ausgestaltet sein, dass Kreuzungen des mobilen Teils des Fördersystems mit Elementen des mobilen Teils oder des fest installierten Teils des Fördersystems vermieden werden, insbesondere auch dann, wenn mehrere Verpackungslinien parallel betrieben werden. Die Layouts berücksichtigen ferner zukünftig angesteuerte Silos, so dass Streckenplanungen von Förderstreckenabschnitten im Hinblick auf nachfolgende Förderstreckenabschnitte optimiert werden. Dies kann das Minimieren von Verfahrzeiten von Verpackungsstationen sowie der Summe der Verfahrzeiten der einzelnen Stetigförderersegmente beinhalten. In die Layoutplanung kann ferner der Batteriefüllstand des einen oder der mehreren Stetigförderersegmente mit einfließen.

Beispielsweise kann mittels des Förderstreckenabschnitts zumindest eine weitere außerhalb der Verpackungslinie befindliche Verpackungsstation stromabwärts der Verpackungsstation der Verpackungslinie mit der Verpackungslinie gekoppelt werden. Dadurch kann bei nicht vollständiger Auslastung der Verpackungslinie diese durch die Zuführung von Verpackungseinheiten einer weiteren Verpackungsstation besser und dauerhaft ausgelastet werden.

Außerdem kann beispielsweise mittels des Förderstreckenabschnitts ein Bypass zwischen der Verpackungslinie und einer weiteren Verpackungslinie, insbesondere zwischen deren fest installierten Teilen der jeweiligen Fördersysteme, hergestellt werden. Dadurch kann bei Ausfall eines Teils wie beispielsweise einer Bearbeitungsstation einer der Verpackungslinien vermieden werden, dass diese für die Dauer des Ausfalls vollständig stillgelegt werden muss. Stattdessen kann durch den Bypass der stromaufwärts der Ausfallstelle liegende Teil der Verpackungslinie auf die benachbarte Verpackungslinie eingeschleust werden, so dass die vom Ausfall betroffene Verpackungslinie zumindest teilweise weiterbetrieben werden kann. Das Bereitstellen eines Bypasses zwischen zweien oder mehreren Verpackungslinien kann außerdem sinnvoll sein, wenn diese temporär unterschiedlich stark ausgelastet sind, so dass im Falle eines Staus von Verpackungseinheiten in einer der Linien der überschüssige Anteil der Verpackungseinheiten zur Weiterbearbeitung auf eine der anderen Verpackungslinien transferiert werden kann.

Es kann vorgesehen sein, dass die Mehrzahl Bearbeitungsstationen ferner einen stromabwärts der Verpackungsstation angeordneten Palettierer umfassen. Dabei können die Verpackungsstation und der Palettierer durch zumindest einen fest installierten Teil und zumindest einen mobilen Teil des Fördersystems miteinander verbunden sein, wobei der fest installierte Teil mit dem mobilen Teil gekoppelt ist.

Dabei kann vorgesehen sein, dass der mobile Teil mit der Verpackungsstation und der fest installierte Teil mit dem Palettierer verbunden ist. Alternativ kann vorgesehen sein, dass sich der mobile Teil des Fördersystems bis zum Palettierer hin erstreckt und sich der fest installierte Teil des Fördersystems stromabwärts des Palettierers an diesen anschließt.

Die Bearbeitungsstationen der Verpackungslinie können ferner eine Ladungssicherungsstation (z.B. Haubenstretchmaschine, Haubenschrumpfmaschine, Wickelstretchmaschine, Wickelschrumpfmaschine, oder ein Verpackungsroboter) umfassen, welche mit dem Palettierer durch einen fest installierten Teil des Fördersystems verbunden ist. In der Ladungssicherungsstation können die im Palettierer palettierten Stückgutstapel mit einer Folie überzogen oder umwickelt werden. Die Folie dient der Stabilisierung des Stückgutstapels sowie als Witterungs- und Transportschutz.

Die Verpackungslinie kann ferner ein Lager zum Abstellen von nicht benötigten Stetigförderersegmenten und/oder nicht benötigten Unstetigförderern aufweisen. Der Vorteil des Lagerns von ungenutzten Elementen an separater Stelle besteht darin, dass mehr Raum im Produktionsbereich zur Verfügung steht bzw. dieser frei von Hindernissen ist. Ferner ist eine vereinfachte Wartung der Segmente und der Unstetigförderer möglich, außerdem kann eine redundante Anzahl von Segmenten und/oder Unstetigförderern vorgehalten werden, so dass stets ein gewisser Puffer zur Verfügung steht.

Es kann vorgesehen sein, dass die Stetigförderersegmente Gurtförderersegmente und/oder Rollenfördersegmente sind. Jedes Gurtförderersegment kann dabei einen eigenen Gurt und einen eigenen Antrieb aufweisen. Jedes Rollenförderersegment kann dabei einen eigenen Antrieb für die Rollen aufweisen.

Der oder die Unstetigförderer können zum Anheben und Absenken eines oder mehrerer Stetigförderersegmente ausgebildet sein. Es können auch mehrere Unstetigförderer zum Anheben eines Stetigförderersegments verwendet und dazu synchronisiert werden. Alternativ können mehrere Unstetigförderer als Einheit zum gemeinsamen Transportieren zumindest eines Stetigförderersegments verwendet werden. Für den Transport kann der Unstetigförderer unter ein Stetigförderersegment fahren und dieses mittels einer Hubeinrichtung vom Boden hochheben. An der Zielstelle kann der Unstetigförderer das transportierte Segment wieder absetzen und unter dem Segment wieder herausfahren. Als Sicherheitsvorkehrung beim Transport der Stetigförderersegmente kann vorgesehen sein, dass diese während des Transports auf dem Unstetigförderer arretiert werden. Alternativ ist denkbar, dass die Stetigförderersegmente auf Lenkrollen abgestützt sind, so dass der Unstetigförderer das Stetigförderersegment einfach ziehen oder schieben kann und dabei mittig unter dem Förderer positioniert ist, dazu ist kein Tragen der Last erforderlich. Alternativ kann jedes Stetigförderersegment verfahrbar sein und ein Lenkgestänge aufweisen oder mit einem solchen verbindbar sein, wobei das gegenüberliegende Ende des Lenkgestänges für den Transport mit dem Unstetigförderer koppelbar ist. Alternativ können die Stetigförderersegmente auch unmittelbar an einen Unstetigförderer angehängt werden. Weiterhin alternativ kann vorgesehen sein, dass das Stetigförderersegment bzw. der Gurtförderer bzw. der Rollenförderer und der Unstetigförderer bzw. das AGV eine Einheit bilden. Es ist denkbar, dass die Stetigförderersegmente in einem ersten, standardmäßigen, Zustand arretiert sind und bei Kontakt mit dem Unstetigförderer die Arretierung mechanisch gelöst wird.

Es kann vorgesehen sein, dass die Stetigförderersegmente zum automatischen Herstellen einer mechanischen- und/oder einer elektrischen- und/oder einer Datenverbindung mit einem Anschlusselement eingerichtet sind, wenn diese sich mit dem Anschlusselement in einem gegenseitigen Zugriffsbereich befinden. Mindestens ein Anschlusselement kann an einem Stetigförderersegment und/oder an einem fest installierten Teil des Fördersystems und/oder an einer Bearbeitungsstation und/oder an einer stationären Befestigung der Infrastruktur des Produktionsbereichs (beispielsweise Boden des Produktionsbereichs, Hallenträger, etc.) vorhanden sein. Mit Hilfe der Anschlusselemente können die Stetigförderersegmente untereinander und/oder mit den Bearbeitungsstationen und/oder den fest installierten Teilen des Fördersystems und/oder mit einer stationären Befestigung der Infrastruktur des Produktionsbereichs zum Ausbilden eines Förderstreckenabschnitts gekoppelt / verbunden werden. Es kann vorgesehen sein, dass die mechanische Arretierung eines Stetigförderersegments mit einem Anschlusselement elektromagnetisch und/oder pneumatisch und/oder elektrisch und/oder durch einen elektromagnetisch und/oder pneumatisch und/oder elektrisch betätigten Haken erfolgt. Es kann vorgesehen sein, dass die mechanische Arretierung eines Stetigförderersegments mit einem Anschlusselement durch die Bewegung des Stetigförderersegments in seine finale Position erfolgt. Alternativ ist denkbar, dass ein Stetigförderersegment mit einem Anschlusselement über ein mechanisches Gestänge gekoppelt ist. Ferner kann vorgesehen sein, dass nach dem Konzertstuhlprinzip ein Ineinanderverhaken der Stetigförderersegmente untereinander erfolgt. Ferner ist denkbar, dass das Koppeln eines Stetigförderersegments an ein Anschlusselement automatisch durch Absenken und das Entkoppeln durch Anheben des Stetigförderersegments bewirkt ist. Es kann vorgesehen sein, dass das Koppeln eines Stetigförderersegments an ein Anschlusselement durch horizontale und/oder vertikale Annäherung erfolgt. Es kann vorgesehen sein, dass das Koppeln eines Stetigförderersegments an ein Anschlusselement über eine Arretierung im Boden des Produktionsbereichs erfolgt. Alle genannten Alternativen, die sich auf die Arretierung eines Stetigförderersegments mit einem Anschlusselement beziehen, gelten analog auch für die De-Arretierung beziehungsweise das Entriegeln eines Stetigförderersegments von einem Anschlusselement. Es kann vorgesehen sein, dass das Verbinden und Trennen von Energie- und Datenleitungen zwischen den einzelnen Segmenten über einen im Zuge des mechanischen Verbindens/Trennens ebenfalls verbundenen oder getrennten Steckkontakt, also kabelgebunden, erfolgt. Alternativ ist denkbar, dass zumindest die Datenverbindung drahtlos hergestellt ist. Ferner ist denkbar, dass die Energieübertragung kontaktlos erfolgt. Weiterhin alternativ kann vorgesehen sein, dass die Stetigförderersegmente unmittelbar über den Boden des Produktionsbereichs arretiert sind und/oder die Daten- bzw. Energieanbindung im Sinne eines Smart Floor über den Boden des Produktionsbereichs erfolgt.

Es kann vorgesehen sein, dass mehrere Unstetigförderer vorgesehen sind, welche über eine zentrale Leitstelle oder dezentral untereinander koordiniert sind. Ferner ist denkbar, dass die mehreren Unstetigförderer als Einheit zum gemeinsamen Transportieren zumindest eines Stetigförderersegments verwendbar sind. Bei der Koordination mehrerer AGVs beim Transportieren eines Förderers besteht ein wichtiger Aspekt in der Vermeidung von Kollisionen.

Beispielhafte Ausführungsformen der Erfindung werden anhand der nachfolgenden Figuren erläutert. Dabei zeigt:
- Fig. 1: eine schematische Seitenansicht eines beispielhaften Verlaufs von zwei parallelen Verpackungslinien;
- Fig. 2: eine schematische Draufsicht eines beispielhaften Verlaufs von zwei parallelen Verpackungslinien gemäß einer Ausführungsform der Erfindung;
- Fig. 3: eine schematische Draufsicht eines beispielhaften Verlaufs von zwei parallelen Verpackungslinien gemäß einer Ausführungsform der Erfindung;
- Fig. 4: eine schematische Seitenansicht einer beispielhaften Verpackungslinie gemäß einer Ausführungsform der Erfindung; und
- Fig. 5: eine schematische Draufsicht eines Systems gemäß einer Ausführungsform der Erfindung.

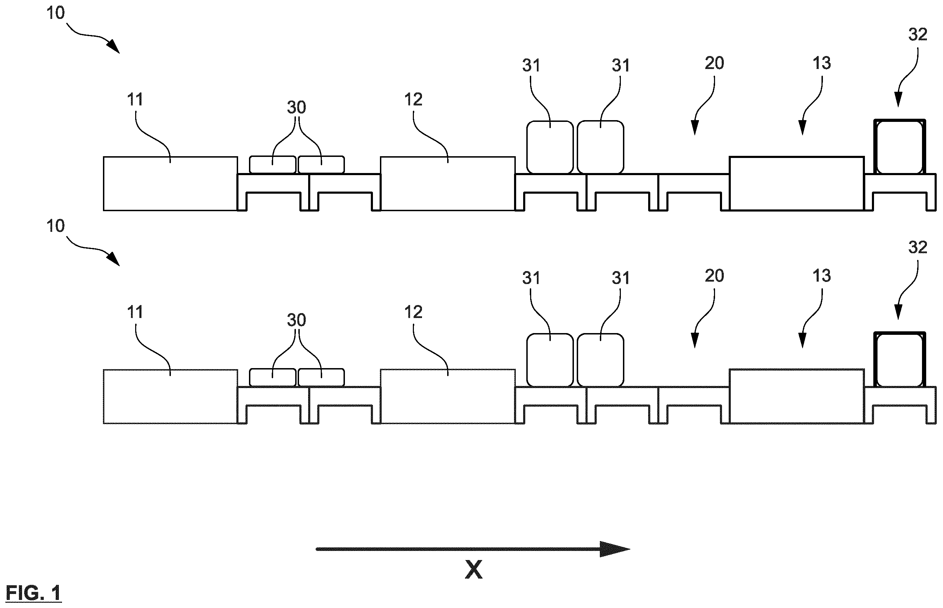

In Fig. 1 ist beispielhaft der Verlauf zweier parallel betriebener Verpackungs- bzw. Abfülllinien 10 dargestellt. Beide Abfülllinien 10 sind gleich ausgestaltet und bestehen jeweils aus drei Bearbeitungsstationen sowie jeweils einem diese verbindenden Fördersystem 20. Eingangsseitig weisen die Verpackungslinien 10 eine Abfüllstation 11 auf, welche als FFS-Maschine ausgebildet sein kann, in welcher Säcke 30 zunächst hergestellt, mit Schüttgut befüllt und anschließend verschlossen werden. Hierzu kann die Abfüllstation 11 unter einem Auslass eines Schüttgutsilos angeordnet sein. Die Säcke 30 werden mittels des Fördersystems 20 in einer Förderrichtung X von der Abfüllstation 11 zu einem nachfolgenden Palettierer 12 befördert, in welchem die Säcke 30 auf Paletten zu sogenannten Stückgutstapeln 31 gestapelt werden, welche anschließend mittels des Fördersystems 20 an eine nachfolgende Stretch-Hood-Bearbeitungsstation 13 weitertransportiert werden. Dort werden die Palette sowie die bis zu diesem Zeitpunkt lose auf dieser gestapelten Säcke 30 mittels Folie umhüllt und dadurch die Säcke 30 auf der Palette zu einem verpackten Stückgutstapel 32 fixiert.

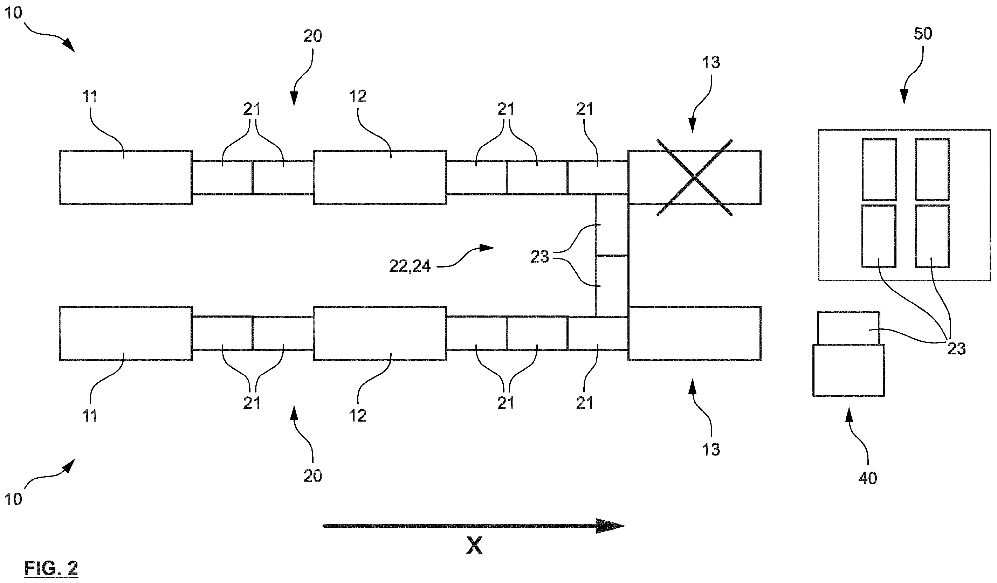

Fig. 2 zeigt zwei parallele Verpackungslinien 10 mit demselben wie in Fig. 1 gezeigten Ablaufschema. In der gezeigten Ausführungsform sind die Stationen 11, 12, 13 untereinander mittels fest installierter Fördertechnikabschnitte 21 miteinander verbunden. Es ist zu erkennen, dass eine der Stretch-Hood Bearbeitungsstationen 13 temporär außer Betrieb ist und die obere Verpackungslinie 10 unter normalen Umständen nun vollständig gestoppt werden müsste. Jedoch konnte mittels Bereitstellung eines mobilen Fördersystemteils 22 ein Bypass zwischen den jeweils den Palettierer 12 mit der Stretch-Hood Bearbeitungsstation13 verbindenden Abschnitten der fest installierten Fördertechnik 21 geschaffen werden, so dass palettierte Säcke 30 der oberen Verpackungslinie 10 in die untere Linie 10 eingeschleust werden und zur weiteren Bearbeitung der dortigen Ladungssicherungsstation 13 zugeführt werden können. Der Bypass ist im dargestellten Beispiel aus zwei Gurtförderersegmenten 23 gebildet, welche so zueinander angeordnet sind, dass diese einen gemeinsamen Förderstreckenabschnitt 24 mit einer von der oberen zur unteren Verpackungslinie 10 gerichteten Förderrichtung ausbilden. Fig. 2 zeigt ferner ein Lager 50 zum Aufbewahren von ungenutzten oder redundant vorhandenen Stetigförderersegmenten 23 bzw. für ungenutzte AGVs 40. Die AGVs können zum Aufladen der Bordbatterie rechtzeitig das Lager 50 angefahren haben oder aufgrund von Defekten oder regelmäßigen Wartungsintervallen im Lager 50 gewartet werden.

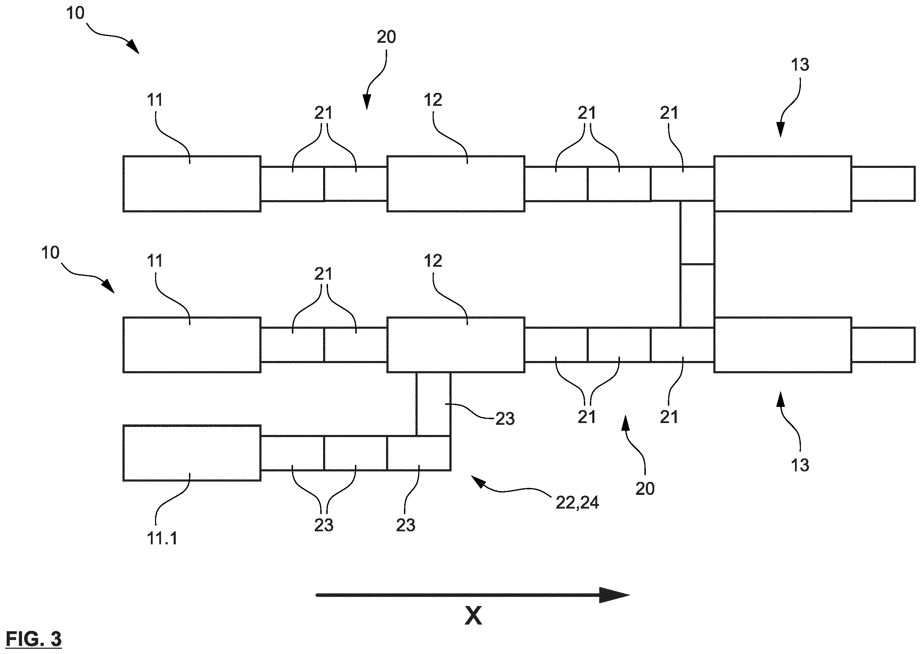

Fig. 3 zeigt wie Fig. 2 zwei parallele Verpackungslinien 10 mit demselben wie in Fig. 1 gezeigten Ablaufschema. In der gezeigten Ausführungsform sind die Stationen 11, 12, 13 untereinander wieder mittels fest installierter Fördertechnikabschnitte 21 miteinander verbunden. Der Bypass aus Fig. 2 ist in der gezeigten Ausführungsform hingegen durch einen Abschnitt fest installierter Fördertechnik 21 realisiert. Ferner sind beide Ladungssicherungs-Stationen 13 im Betrieb. In der dargestellten Ausführungsform ist allerdings eine weitere Abfüllstation 11.1 über einen mobilen Förderstreckenabschnitt 24 an die untere der Verpackungslinien 10 angeschlossen. Dieser mündet im gezeigten Ausführungsbeispiel über unmittelbar in den Palettierer 12, welcher dazu eine entsprechende Kopplungseinrichtung aufweist. Der gezeigte mobile Förderstreckenabschnitt 24 weist im dargestellten Beispiel vier Stetig- bzw. Gurtförderersegmente 23 auf. Da die Streckenführung eine Kurve aufweist, ist an entsprechender Stelle ein kurvenförmiges Förderersegment eingesetzt, welches als Rollenbahnsegment ausgeführt sein kann.

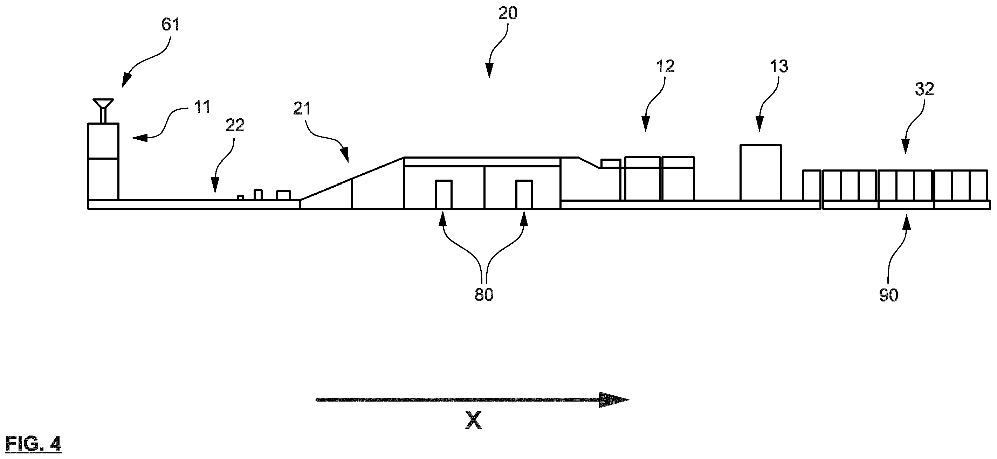

Fig. 4 zeigt einen beispielhaften Verlauf einer Verpackungslinie 10 gemäß einer Ausführungsform der Erfindung. Eingangsseitig ist eine an ein Silo 61 angeschlossene Abfüllstation 11 vorgesehen, in welcher Säcke 30 zunächst hergestellt, mit Schüttgut befüllt und anschließend verschlossen werden. Über einen ersten

Förderstreckenabschnitt 24, welcher als mobiler Teil 22 des Fördersystems 20 ausgebildet ist, werden die Säcke 30 in Förderrichtung X in Richtung der stromabwärts gelegenen Bearbeitungsstationen transportiert. An den mobilen Teil 22 des Fördersystems 20 schließt sich ein fest installierter Fördersystemteil 21 an. Dieser weist wie dargestellt eine Steigung auf, an welche sich ein hochgelegener Förderabschnitt anschließt, unter welchem Unterführungen 80 für Gabelstapler vorgesehen sind. Es ist klar, dass für die Steigung und die hochgelegene Strecke fest installierte Fördertechnikdeutlich besser geeignet ist, anstatt auch in diesem Bereich eine mobile Lösung vorzusehen. In Förderrichtung X hinter den Unterführungen 80 angeordnet ist ein Palettierer 12, in welchem die ankommenden Säcke 30 palettiert werden. Die palettierten Stückgutstapel 31 werden anschließend einer Ladungssicherungs-Station 13 zugeführt und die verpackten Stückgutstapel 32 anschließend in einer Ladezone 90 zum Abholen bereitgestellt.

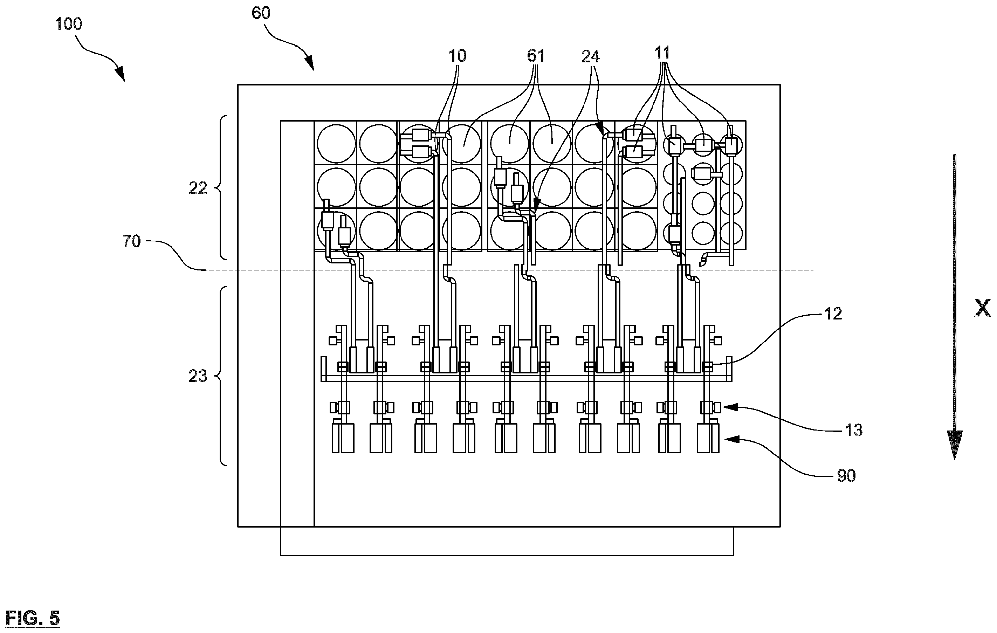

Fig. 5 zeigt ein System 100 gemäß einer Ausführungsform der Erfindung. Dieses weist insgesamt zehn parallele Verpackungslinien 10 auf, welche zum Abfüllen von Schüttgut einer Silofarm 60 vorgesehen sind. Die dargestellte Silofarm 60 weist drei Reihen und zehn Spalten von Silos 61, demnach also dreißig Silos 61 auf. Im Bereich der Silofarm 60 sind insgesamt dreizehn Abfüllstationen 11 angeordnet. Diese sind jeweils über mobile Förderstreckenabschnitte 22, 24 mit nachgeordneten Palettierern 12 verbunden, wobei die Layouts der Förderstreckenabschnitte 24 an die derzeitige Position und Ausrichtung der Abfüllstationen 11 angepasst sind. Den Palettierern 12 nachgeordnet sind jeweils Ladungssicherungs-Stationen 13, von welchen die verpackten Stückgutstapel 32 anschließend an Ladezonen 90 überführt werden. Die Förderstreckenabschnitte 24 sind so konfiguriert, dass diese sich nicht überkreuzen und auf kürzestem Wege in Richtung der zugehörigen Palettierer 12 geführt sind, dabei müssen Hindernisse wie Säulen oder anderweitige vorhandene Maschinen im Produktionsbereich umfahren werden. Die Verpackungslinien 10 weisen jeweils einen Anschlusspunkt 70, gekennzeichnet durch die eingezeichnete gestrichelte Linie, auf, an welchem die mobilen Fördererabschnitte 21 jeweils an fest installierte Fördererabschnitte 23 angeschlossen sind. Somit sind die im oberen Bildbereich dargestellten Fördererabschnitte 22 allesamt mobil ausgeführt und umkonfigurierbar, die im unteren Bildbereich dargestellten Fördererabschnitte 21 hingegen fest installiert und somit ortsfest. Die Abfüllstationen 11 können innerhalb des Silorasters automatisch verfahren werden, so dass das Leeren der Silos 61 über die Abfüllstationen 11 nach und nach erfolgen kann. Das Layout der mobilen Förderstreckenabschnitte 22, 24 kann dabei jeweils an die neue Abfüllstationposition angepasst werden und die dazu benötigten Gurtförderersegmente 23 mittels AGVs an die jeweilige Zielposition verbracht werden.

### Bezugszeichenliste:

- 10: Verpackungslinie
- 11: Abfüllanlage
- 12: Palettierer
- 13: Ladungssicherungsstation
- 20: Fördersystem
- 21: fest installierte Fördertechnik
- 22: mobilen Teil des Fördersystems
- 23: Gurtförderersegmente
- 24: Förderstreckenabschnitt
- 30: Sack
- 31: Stückgutstapel
- 32: Verpackter Stückgutstapel
- 40: AGV
- 50: Lager
- 60: Silofarm
- 61: Silo
- 70: Anschlusspunkt
- 80: Unterführung für Gabelstapler
- 90: Ladezone
- 100: System
- X: Förderrichtung

## Patentansprüche

1. System (100) aufweisend zumindest eine Verpackungslinie (10), beispielsweise eine FFS-Linie, mit einem Fördersystem (20) zum Transport von gefüllten Verpackungseinheiten, beispielsweise mit Schüttgut gefüllte Säcke (30), zwischen Bearbeitungsstationen der Verpackungslinie (10), aufweisend:
eine Mehrzahl mittels des Fördersystems (20) miteinander verbundener Bearbeitungsstationen, welche zumindest eine Verpackungsstation (11), beispielsweise eine Abfüllstation, umfassen, wobei das Fördersystem (20) zumindest einen fest installierten Teil (21) und zumindest einen mobilen Teil (22) aufweist, wobei der mobile Teil (22) eine Mehrzahl miteinander und/oder mit dem fest installierten Teil (21) und/oder den Bearbeitungsstationen verbindbarer Stetigförderersegmente zum Ausbilden eines Förderstreckenabschnitts (24) aufweist;
zumindest einen Unstetigförderer, beispielsweise ein AGV (40), welcher zum Transportieren der Stetigförderersegmente ausgebildet ist, wobei der Unstetigförderer derart angesteuert ist, dass mittels diesem der Förderstreckenabschnitt (24) nach einem vorbestimmbaren Layout konfigurierbar ist;
**dadurch gekennzeichnet, dass**
das System ferner eine Mehrzahl in einem Raster angeordneter Schüttgutsilos (61) aufweist, wobei die zumindest eine Verpackungsstation (11) der Verpackungslinie (10) zwischen den mehreren Schüttgutsilos (61) verfahrbar ist und die Verpackungslinie (10) einen außerhalb des Rasters liegenden Anschlusspunkt (70) des sich stromabwärts von diesem erstreckenden fest installierten Teils des Fördersystems der Verpackungslinie aufweist, wobei der mobile Teil (22) mit dem Anschlusspunkt (70) und der Verpackungsstation (11) verbunden ist und einen Förderstreckenabschnitt (24) zwischen diesen ausbildet, welcher ein vorbestimmbares Layout aufweist.

2. System (100) nach Anspruch 1, wobei das Layout Informationen über den Verlauf des Förderstreckenabschnitts (24), dessen Verbindungspunkte mit dem Fördersystem (20) und/oder den Bearbeitungsstationen sowie die Anzahl der für den Förderstreckenabschnitt (24) notwendigen Stetigförderersegmente umfasst.

3. System (100) nach Anspruch 1 oder 2, wobei das Layout über eine zentrale Leitstelle oder dezentral koordiniert wird.

4. System (100) nach einem der Ansprüche 1 bis 3, wobei mittels des Förderstreckenabschnitts (24) zumindest eine weitere außerhalb der Verpackungslinie (10) befindliche Verpackungsstation (11.1) stromabwärts der Verpackungsstation (11) der Verpackungslinie (10) mit der Verpackungslinie (10) koppelbar ist.

5. System (100) nach einem der vorangehenden Ansprüche, wobei mittels des Förderstreckenabschnitts (24) eine Umleitung von der Verpackungslinie (10) auf eine weitere Verpackungslinie (10), insbesondere zwischen deren fest installierten Teilen (21) der jeweiligen Fördersysteme (20), herstellbar ist.

6. System (100) nach einem der vorangehenden Ansprüche, wobei die Mehrzahl Bearbeitungsstationen ferner einen stromabwärts der Verpackungsstation (11) angeordneten Palettierer (12) umfassen, wobei die Verpackungsstation (11) und der Palettierer (12) vorzugsweise durch zumindest einen fest installierten Teil (21) und zumindest einen mobilen Teil (22) des Fördersystems (20) miteinander verbunden sind, wobei der fest installierte Teil (21) mit dem mobilen Teil (22) gekoppelt ist.

7. System (100) nach Anspruch 6, wobei der mobile Teil (22) mit der Verpackungsstation (11) und der fest installierte Teil mit dem Palettierer (12) verbunden ist.

8. System (100) nach einem der Ansprüche 6 oder 7, wobei die Bearbeitungsstationen ferner eine Ladungssicherungsstation (13) umfassen, welche mit dem Palettierer (12) durch einen fest installierten Teil (21) des Fördersystems (20) verbunden ist.

9. System (100) nach einem der vorangehenden Ansprüche, ferner aufweisend ein Lager (50) zum Abstellen von nicht benötigten Stetigförderersegmenten und/oder nicht benötigten Unstetigförderern.

10. System (100) nach einem der vorangehenden Ansprüche, wobei die Stetigförderersegmente Gurtförderersegmente (23) und/oder Rollenfördersegmente sind.

11. System (100) nach einem der vorangehenden Ansprüche, wobei der Unstetigförderer zum Anheben und Absenken eines oder mehrerer Stetigförderersegmente ausgebildet ist.

12. System (100) nach einem der vorangehenden Ansprüche, wobei die Stetigförderersegmente zum automatischen Herstellen einer mechanischen- und/oder einer elektrischen- und/oder einer Datenverbindung mit einem Anschlusselement eingerichtet sind, wenn diese sich mit dem Anschlusselement in einem gegenseitigen Zugriffsbereich befinden.

13. System (100) nach Anspruch 12, wobei die Energieversorgung und/oder Datenverbindung eines Stetigförderersegments mit einem Anschlusselement kabelgebunden und/oder kontaktlos erfolgt.

14. System (100) nach Anspruch 12 oder 13, wobei das Koppeln eines Stetigförderersegments an ein Anschlusselement automatisch durch Absenken und das Entkoppeln durch Anheben des Stetigförderersegments bewirkt ist.

15. System (100) nach einem der vorangehenden Ansprüche, wobei mehrere Unstetigförderer vorgesehen sind, welche über eine zentrale Leitstelle oder dezentral untereinander koordiniert sind.

16. System (100) nach Anspruch 15, wobei die mehreren Unstetigförderer als Einheit zum gemeinsamen Transportieren zumindest eines Stetigförderersegments verwendbar sind.

## Claims

1. System (100) having at least one packaging line (10), for example an FFS line, having a conveyor system (20) for transporting filled packaging units, for example bags filled with bulk material (30), between processing stations of the packaging line (10), having:
a plurality of processing stations which are connected to one another by means of the conveyor system (20), and which comprise at least one packing station (11), for example a filling station,
wherein the conveyor system (20) has at least one fixedly installed part (21) and at least one mobile part (22), wherein the mobile part (22) has a plurality of continuous conveyor segments, which are connectable to one another and/or to the fixedly installed part (21) and/or the processing stations for forming a conveyor section portion (24);
at least one discontinuous conveyor, for example an AGV (40), which is designed for transporting the continuous conveyor segments, wherein the discontinuous conveyor is actuated in such a manner that by means of the latter the conveyor section portion (24) is able to be configured according to a predeterminable layout;
**characterized in that**
the system furthermore has a plurality of bulk material silos (61) disposed in a grid, wherein the at least one packing station (11) of the packaging line (10) is displaceable between the plurality of bulk material silos (61), and the packaging line (10) has a connection point (70), which lies outside the grid, of the fixedly installed part of the conveyor system of the packaging line disposed downstream of said connection point (70), wherein the mobile part (22) is connected to the connection point (70) and the packing station (11) and forms therebetween a conveyor section portion (24) which has a predeterminable layout.

2. System (100) according to Claim 1, wherein the layout comprises items of information about the course of the conveyor section portion (24), its connection points to the conveyor system (20) and/or the processing stations as well as the number of continuous conveyor segments required for the conveyor section portion (24).

3. System (100) according to Claim 1 or 2, wherein the layout is coordinated via a central control centre or in a decentralized manner.

4. System (100) according to one of Claims 1 to 3, wherein at least one further packing station (11.1), located outside the packaging line (10), by means of the conveyor section portion (24) is able to be coupled to the packaging line (10) downstream of the packing station (11) of the packaging line (10).

5. System (100) according to one of the preceding claims, wherein a diversion from the packaging line (10) to a further packaging line (10), in particular between its fixedly installed parts (21) of the respective conveyor systems (20), is able to be established by means of the conveyor section portion (24).

6. System (100) according to one of the preceding claims, wherein the plurality of processing stations furthermore comprise a palletizer (12) disposed downstream of the packing station (11), wherein the packing station (11) and the palletizer (12) are preferably connected to one another by at least one fixedly installed part (21) and at least one mobile part (22) of the conveyor system (20), wherein the fixedly installed part (21) is coupled to the mobile part (22).

7. System (100) according to Claim 6, wherein the mobile part (22) is connected to the packing station (11), and the fixedly installed part is connected to the palletizer (12).

8. System (100) according to one of Claims 6 and 7, wherein the processing stations furthermore comprise a load securing station (13) which is connected to the palletizer (12) by a fixedly installed part (21) of the conveyor system (20).

9. System (100) according to one of the preceding claims, furthermore comprising a storage (50) for depositing non-required continuous conveyor segments and/or non-required discontinuous conveyors.

10. System (100) according to one of the preceding claims, wherein the continuous conveyor segments are belt conveyor segments (23) and/or roller conveyor segments.

11. System (100) according to one of the preceding claims, wherein the discontinuous conveyor is designed for lifting and lowering one or a plurality of continuous conveyor segments.

12. System (100) according to one of the preceding claims, wherein the continuous conveyor segments are configured for automatically establishing a mechanical and/or an electrical and/or a data connection to a connecting element, when said continuous conveyor segments and the connecting element are located in a region of mutual access.

13. System (100) according to Claim 12, wherein the power supply and/or data connection of a continuous conveyor segment to a connecting element takes place by wire or in a contactless manner.

14. System (100) according to Claim 12 or 13, wherein the coupling of a continuous conveyor segment to a connecting element is effected automatically by lowering and decoupling by lifting the continuous conveyor segment.

15. System (100) according to one of the preceding claims, wherein a plurality of discontinuous conveyors are provided, which are coordinated amongst one another via a central control centre or in a decentralized manner.

16. System (100) according to Claim 15, wherein the plurality of discontinuous conveyors are able to be used as a unit for conjointly transporting at least one continuous conveyor segment.

## Revendications

1. Système (100) présentant au moins une ligne d'emballage (10), par exemple une ligne FFS, avec un système de transport (20) pour transporter des unités d'emballage remplies, par exemple des sacs (30) remplis de produits en vrac, entre des postes de traitement de la ligne d'emballage (10), présentant :
une pluralité de postes de traitement reliés entre eux au moyen du système de transport (20), qui comprennent au moins un poste d'emballage (11), par exemple un poste de remplissage,
le système de transport (20) présentant au moins une partie installée de manière fixe (21) et au moins une partie mobile (22), la partie mobile (22) présentant une pluralité de segments de transporteur continus pouvant être reliés entre eux et/ou à la partie installée de manière fixe (21) et/ou aux postes de traitement pour réaliser une section de voie de transport (24) ;
au moins un transporteur discontinu, par exemple un AGV (40), qui est réalisé pour transporter les segments de transporteur continus, le transporteur discontinu étant commandé de telle sorte qu'au moyen de celui-ci, la section de voie de transport (24) peut être configurée selon un agencement prédéterminable ;
**caractérisé en ce que**
le système présente en outre une pluralité de silos de produits en vrac (61) disposés selon une trame, l'au moins un poste d'emballage (11) de la ligne d'emballage (10) pouvant être déplacé entre les plusieurs silos de produits en vrac (61), la ligne d'emballage (10) présentant un point de raccordement (70) de la partie installée de manière fixe du système de transport de la ligne d'emballage s'étendant en aval de celui-ci, situé à l'extérieur de la trame, la partie mobile (22) étant reliée au point de raccordement (70) et au poste d'emballage (11) et réalisant entre ceux-ci une section de voie de transport (24) qui présente un agencement prédéterminable.

2. Système (100) selon la revendication 1, dans lequel l'agencement comprend des informations sur le tracé de la section de voie de transport (24), ses points de liaison avec le système de transport (20) et/ou les postes de traitement, ainsi que le nombre de segments de transporteur continus nécessaires pour la section de voie de transport (24).

3. Système (100) selon la revendication 1 ou 2, dans lequel l'agencement est coordonné par l'intermédiaire d'un emplacement de commande central ou de manière décentralisée.

4. Système (100) selon l'une quelconque des revendications 1 à 3, dans lequel au moins un autre poste d'emballage (11.1) se trouvant à l'extérieur de la ligne d'emballage (10) peut être couplé à la ligne d'emballage (10) au moyen de la section de voie de transport (24), en aval du poste d'emballage (11) de la ligne d'emballage (10).

5. Système (100) selon l'une quelconque des revendications précédentes, dans lequel une déviation de la ligne d'emballage (10) vers une autre ligne d'emballage (10), notamment entre ses parties installées de manière fixe (21) des systèmes de transport respectifs (20), peut être établie au moyen de la section de voie de transport (24).

6. Système (100) selon l'une quelconque des revendications précédentes, dans lequel la pluralité de postes de traitement comprend en outre un palettiseur (12) disposé en aval du poste d'emballage (11), le poste d'emballage (11) et le palettiseur (12) étant de préférence reliés entre eux par au moins une partie installée de manière fixe (21) et au moins une partie mobile (22) du système de transport (20), la partie installée de manière fixe (21) étant couplée à la partie mobile (22).

7. Système (100) selon la revendication 6, dans lequel la partie mobile (22) est reliée au poste d'emballage (11) et la partie installiée de manière fixe est reliée au palettiseur (12).

8. Système (100) selon l'une quelconque des revendications 6 ou 7, dans lequel les postes de traitement comprennent en outre un poste de sécurisation de charge (13) relié au palettiseur (12) par une partie installée de manière fixe (21) du système de transport (20).

9. Système (100) selon l'une quelconque des revendications précédentes, présentant en outre un magasin (50) pour déposer des segments de transporteurs continus non nécessaires et/ou des transporteurs discontinus non nécessaires.

10. Système (100) selon l'une quelconque des revendications précédentes, dans lequel les segments de transporteur continus sont des segments de transporteur à courroie (23) et/ou des segments de transporteur à rouleaux.

11. Système (100) selon l'une quelconque des revendications précédentes, dans lequel le transporteur discontinu est réalisé pour soulever et abaisser un ou plusieurs segments de transporteur continu.

12. Système (100) selon l'une quelconque des revendications précédentes, dans lequel les segments de transporteur continus sont adaptés pour établir automatiquement une liaison mécanique et/ou électrique et/ou de données avec un élément de raccordement lorsqu'ils se trouvent dans une zone d'accès mutuel avec l'élément de raccordement.

13. Système (100) selon la revendication 12, dans lequel l'alimentation en énergie et/ou la liaison de données d'un segment de transporteur continu avec un élément de raccordement est effectuée par câble et/ou sans contact.

14. Système (100) selon la revendication 12 ou 13, dans lequel le couplage d'un segment de transporteur continu à un élément de raccordement est automatiquement effectué par abaissement et le découplage est effectué par soulèvement du segment de transporteur continu.

15. Système (100) selon l'une quelconque des revendications précédentes, dans lequel il est prévu plusieurs transporteurs discontinus qui sont coordonnés entre eux par l'intermédiaire d'un emplacement de commande central ou de manière décentralisée.

16. Système (100) selon la revendication 15, dans lequel les plusieurs transporteurs discontinus sont utilisables en tant qu'unité pour transporter conjointement au moins un segment de transporteur continu.
